# EUROPÄISCHE PATENTANMELDUNG

(11) **EP 2 824 282 A1**
(43) Veröffentlichungstag der Anmeldung: **14.01.2015**
(21) Anmeldenummer: 14169860.5
(22) Anmeldetag: 26.05.2014
(51) Int. Cl.: F01D 11/00, F01D 9/06

(54) **Gasturbine mit Hochdruckturbinenkühlsystem**

(30) Priorität: 08.07.2013 DE 102013011350
(71) Anmelder: Rolls-Royce Deutschland Ltd & Co KG, 15827 Blankenfelde-Mahlow (DE)
(72) Erfinder: Oyarbide, Asier, 10247 Berlin (DE); Hecken, Reinhold, 14913 Riesdorf (DE)
(74) Vertreter: Hoefer & Partner

(57) **Zusammenfassung**

Die Erfindung bezieht sich auf eine Gasturbine mit einem Turbinenleitrad, welches mit Statorschaufeln 29 versehen ist und einen ringsegmentförmigen Schaufelfuß 30 umfasst, wobei die Statorschaufeln 29 hohl ausgebildet sind und einen mit Kühlluft beaufschlagbaren Schaufelinnenraum 31 aufweisen, wobei radial innen, bezogen auf eine Triebwerksachse 1, an dem Schaufelfuß 30 ein ringförmiges Dichtelement 32 einer Zwischenstufendichtung 35 angeordnet ist, wobei in dem Schaufelfuß 30 zumindest ein Ausströmkanal 33 ausgebildet ist, dadurch gekennzeichnet, dass zwischen dem Schaufelfuß 30 und dem Dichtelement 32 ein Ringraum 34, welcher sich im Wesentlichen in axialer Richtung erstreckt, ausgebildet ist, in welchen der Ausströmkanal 33 mündet und welcher in den Bereich der Zwischenstufendichtung 35 mündet.

## Beschreibung

Die Erfindung bezieht sich auf eine Gasturbine, insbesondere ein Fluggasturbine, welche mit einer Hochdruckturbine versehen ist. Dabei ist ein Turbinenleitrad vorgesehen, welches mit Statorschaufeln bestückt ist und einen ringsegmentförmigen Schaufelfuß umfasst. Die Statorschaufeln sind hohl ausgebildet und weisen einen mit Kühlluft beaufschlagbaren Schaufelinnenraum auf. Um eine Abdichtung zwischen den Rotorrädern und den Leiträdern vorzunehmen, ist eine Zwischenstufendichtung vorgesehen, welche ein ringförmiges oder ringsegmentförmiges Dichtelement umfasst, welches radial innen, bezogen auf eine Maschinenachse, an dem Schaufelfuß angeordnet ist. Der Schaufelfuß weist zumindest einen Ausströmkanal auf, durch welchen Kühlluft aus dem Schaufelinnenraum zu der Zwischenstufendichtung geführt werden kann.

Aus dem Stand der Technik ist es bekannt, die Kühlluft aus dem Schaufelinnenraum über Röhren oder rohrförmige Kanäle durch den Schaufelfuß in den Bereich der Zwischenstufendichtung zu leiten. Dies zeigt beispielsweise die US 6,357,999 B1. Eine ähnliche Konstruktion ist auch aus der US 2006/0216140 A1 vorbekannt. Derartige Lösungen sind aufwendig in der Konstruktion und damit kostenintensiv in der Herstellung. Weiterhin ist, bedingt durch die begrenzten Querschnitte der Ausströmkanäle, nicht immer gewährleistet, dass eine ausreichende Kühlluftmenge zur Verfügung gestellt werden kann.

Der Erfindung liegt die Aufgabe zugrunde, eine Gasturbine mit einem Hochdruckturbinenkühlsystem der eingangs genannten Art zu schaffen, welche bei einfachem Aufbau und einfacher, kostengünstiger Herstellbarkeit eine hohe Effizienz aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass zwischen dem Schaufelfuß und dem Dichtelement ein Ringraum ausgebildet ist, welcher sich im Wesentlichen in axialer Richtung erstreckt. Der Ausströmkanal, welcher den Schaufelfuß der Statorschaufel durchdringt, mündet in den Ringraum, welcher wiederum in den Bereich der Zwischenstufendichtung mündet.

Erfindungsgemäß ist somit vorgesehen, dass der Ausströmkanal direkt in einen Ringraum mündet. Hierdurch ist ein großer Strömungsquerschnitt realisierbar, so dass ausreichende Kühlluftvolumina durchgeleitet werden können. Weiterhin ist es möglich, den Ringraum einfach und kostengünstig herzustellen, da dieser zwischen zwei benachbarten separaten Bauteilen ausgebildet sein kann. Dies ist insbesondere aus Fertigungsgründen besonders vorteilhaft und kostenreduzierend. Der Ausströmkanal, welcher bevorzugterweise düsenartig ausgebildet ist, kann mittels eines Gussverfahrens bei der Herstellung des Statorschaufelsegments bzw. des Schaufelfußsegments, in einfacher Weise hergestellt werden.

Durch die Ausleitung der Kühlluft aus dem Schaufelinnenraum durch den düsenartigen Ausströmkanal ergibt sich beim Auftreffen der Kühlluft in den Ringraum zusätzlich ein Prallkühleffekt, welcher die Kühlung der Zwischenstufendichtung erheblich verbessert.

In bevorzugter Weiterbildung der Erfindung ist vorgesehen, dass der Ringraum eine im Wesentlichen gleichbleibende Breite aufweist. Hierdurch verbessert sich das gesamte Strömungsverhalten. Um den Ringraum selbst hinsichtlich seiner Breite bzw. seines Querschnittes sicherzustellen und um die Durchströmung des Ringraumes zu leiten und zu verbessern, ist es besonders vorteilhaft, wenn in dem Ringraum in Strömungsrichtung verlaufende Rippen angeordnet sind. Diese können beispielsweise an dem ringförmigen Dichtelement ausgebildet sein, beispielsweise durch ein Gussverfahren oder durch mechanische Bearbeitung. Die Rippen dienen somit als Abstandshalter, um den Ringraum zu realisieren und eine direkte Anlage zwischen dem Dichtelement und dem Schaufelfuß zu vermeiden. Anstelle an dem Dichtelement ausgebildet zu sein, können die Rippen auch an dem Schaufelfußsegment vorgesehen werden.

Der Mündungsbereich des Ringraums ist bevorzugterweise zur axialen Ausströmung der Kühlluft ausgebildet. Es ist jedoch auch möglich, den Mündungsbereich so zu gestalten, dass die Ausströmung in einem Winkel zur Axialrichtung und/oder in einem Winkel zur Radialrichtung erfolgt. Um die Ausströmung der Kühlluft aus dem Ringraum zu verbessern, kann es besonders vorteilhaft sein, am Mündungsbereich ein ringförmiges Strömungsleitelement vorzusehen. Durch das Strömungsleitelement kann die ausströmende Kühlluft zum einen hinsichtlich der Radialrichtung und/oder der Axialrichtung geneigt ausgebildet sein. Das Strömungselement kann auch mit Durchlasskanälen versehen sein, welche eine Verdrallung der austretenden Kühlluft bewirken und/oder, um einer Drallbildung durch die Relativbewegung zwischen Stator und Rotor entgegenzuwirken.

Durch die erfindungsgemäße Ausgestaltung ist es somit gewährleistet, dass die Kühlluft wirksam und reproduzierbar ausgeleitet wird. Dabei können insbesondere Prallkühleffekte erzielt werden. Weiterhin ist es, insbesondere durch die Rippen und das zusätzliche Strömungsleitelement möglich, eine Umfangsströmung der Kühlluft zu unterdrücken.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung;
- Fig. 2: eine Teil-Schnittansicht eines ersten Ausführungsbeispiels der Erfindung;
- Fig. 3: eine Ansicht, analog Fig. 2, eines weiteren Ausführungsbeispiels der Erfindung;
- Fig. 4: eine Ansicht, analog Fig. 2 und 3, eines weiteren Ausführungsbeispiels der Erfindung mit ringförmigem Strömungsleitelement;
- Fig. 5: eine perspektivische Teil-Ansicht eines Dichtelements mit Rippen;
- Fig. 6: eine Schnittansicht eines Ausführungsbeispiels des Dichtelements mit Rippen;
- Fig. 7: eine Schnittansicht eines Ausführungsbeispiels eines Strömungsleitelements, analog Fig. 4; und
- Fig. 8: eine Teil-Schnittansicht des in Fig. 7 gezeigten Strömungsleitelements.

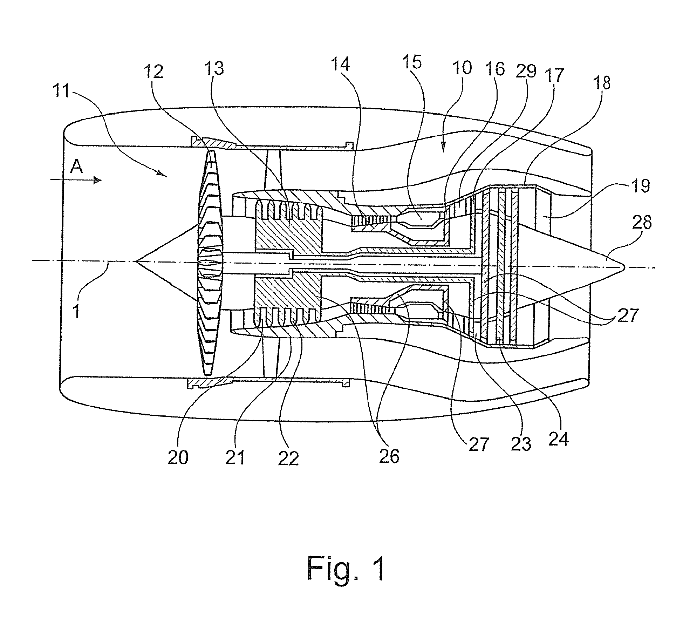

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

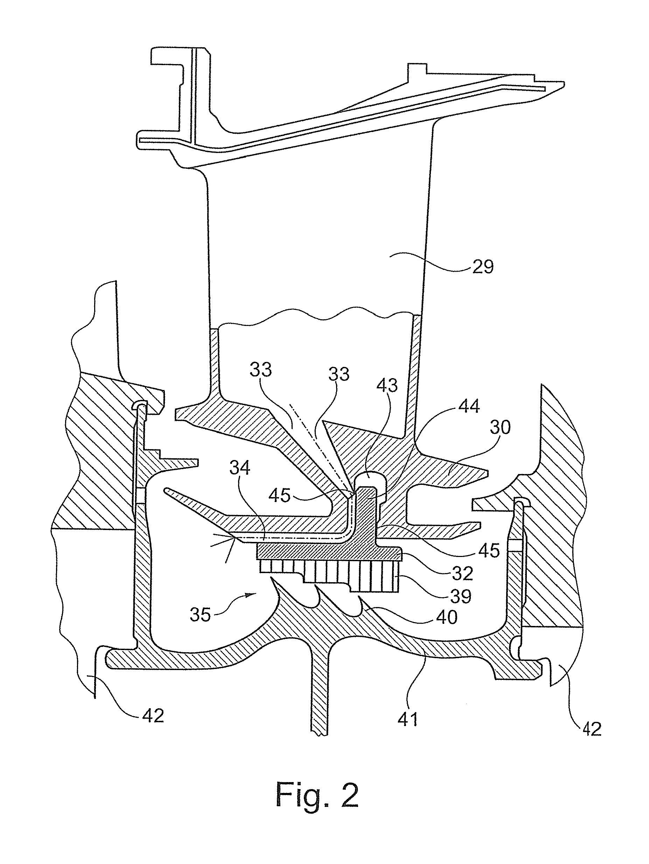

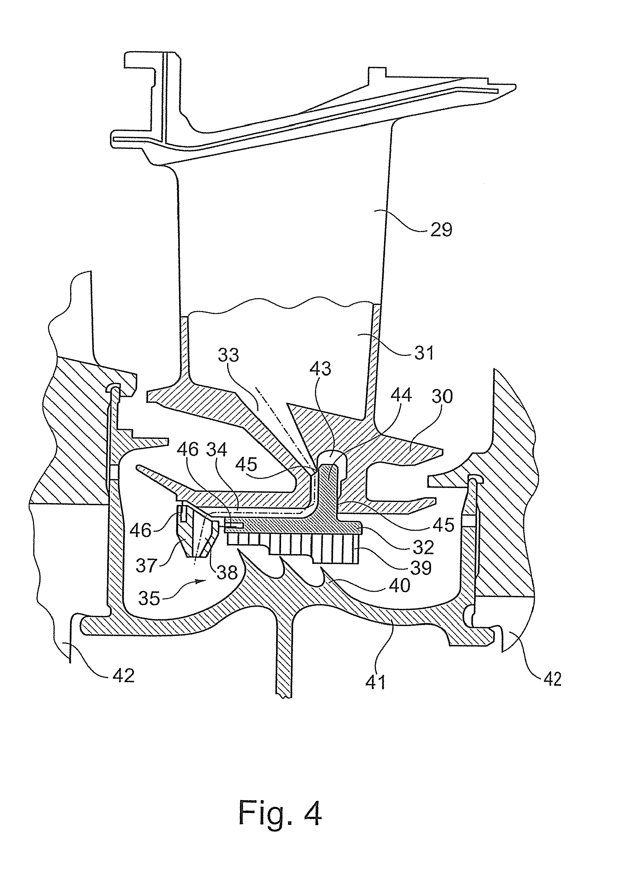

Die Fig. 2 bis 4 zeigen unterschiedliche Ausführungsbeispiele der Erfindung. Dabei ist in schematischer Darstellung eine Statorschaufel 29 dargestellt, welche einen Schaufelfuß 30 umfasst. Die Statorschaufel 29 ist hohl ausgebildet und weist einen Schaufelinnenraum 31 auf, in welchen Kühlluft einleitbar ist. Die Kühlluft strömt dabei, bezogen auf die Fig. 2 bis 4, gegen die Radialrichtung von außen nach innen. Im Schaufelfuß 30 ist ein einziger, singulärer Ausströmkanal 33 ausgebildet, beispielsweise mittels eines Gießverfahrens. Der Ausströmkanal 33, kann wie in den Ausführungsbeispielen der Fig. 2 und 4 dargestellt, düsenförmig ausgebildet sein.

An dem Schaufelfuß 30 ist ein ringförmiges oder ringsegmentförmiges Dichtelement 32 gelagert, welches zur Ausbildung einer Zwischenstufendichtung 35 mit einer Wabenschicht 39 versehen ist, gegen welche in aus dem Stand der Technik bekannter Weise Anstreiflippen 40 gerichtet sind. Die Anstreiflippen 40 sind einstückig mit einem Dichtungsring 41 verbunden, welcher mit benachbarten Rotorscheiben 42 verbunden ist.

Bei dem in Fig. 2 gezeigten Ausführungsbeispiel weist der Schaufelfuß 30 einen sich radial erstreckenden Ringschlitz 43 auf, in welchem ein Ringsteg 44 des ringförmigen Dichtelements 32 aufgenommen ist. Es versteht sich, dass unter dem Begriff "ringförmig" in diesem Zusammenhang insbesondere auch Ringsegmente zu verstehen sind. Zwischen dem Ringsteg 44 und dem Schaufelfuß 30 wird ein Ringraum 34 ausgebildet, durch welchen die Kühlluft aus dem Ausströmkanal 33 strömen kann, so wie dies in Fig. 2 gezeigt ist.

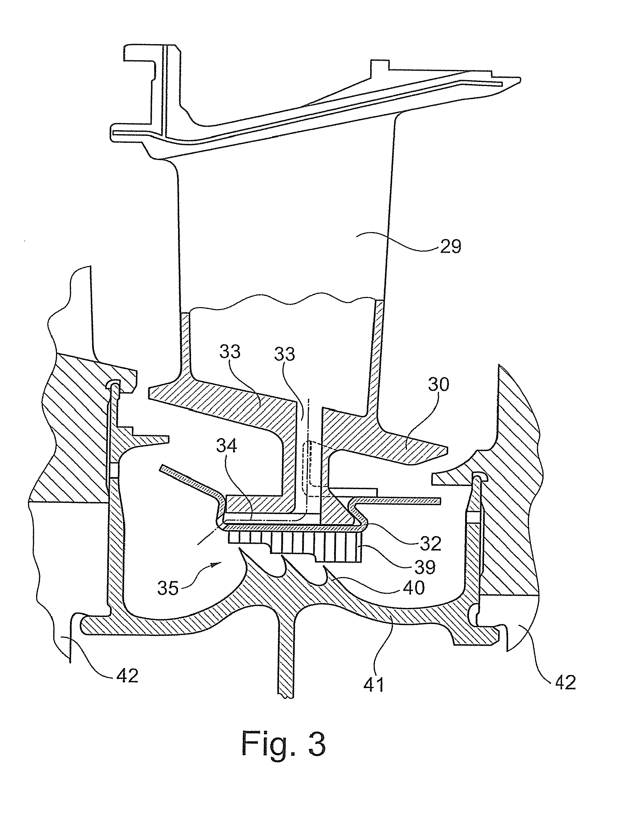

Bei dem in Fig. 3 gezeigten Ausführungsbeispiel ist das ringförmige Dichtelement 32 (Ringsegment) aus einem blechartigen Material ausgebildet und formschlüssig mit dem Schaufelfuß 30 verrastet. Auch hierbei strömt Kühlluft durch den radialen Ausströmkanal 33 in den sich im Wesentlichen in Axialrichtung erstreckenden Ringraum 34, um nachfolgend einem Hohlraum der Zwischenstufendichtung 35 zugeführt zu werden.

Das in Fig. 4 gezeigte Ausführungsbeispiel entspricht im Wesentlichen dem Ausführungsbeispiels der Fig. 2. Zusätzlich ist ein ringförmiges oder ringsegmentförmiges Strömungsleitelement 37 vorgesehen, welches mit einem Durchlasskanal 38 versehen ist. Das Strömungsleitelement 37 dient dazu, die aus dem Ringraum 34 austretende Kühlluft in radialer Richtung und/oder in Umfangsrichtung oder auch in axialer Richtung zu lenken.

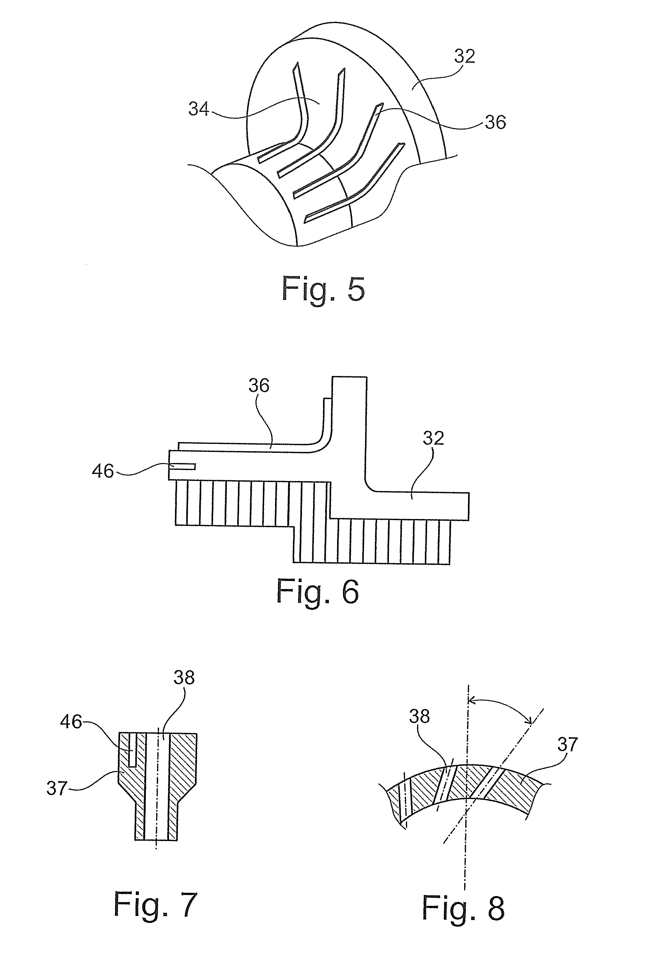

Die Fig. 7 zeigt eine Schnittansicht eines weiteren Ausführungsbeispiels eines Strömungsleitelements 37, während die Fig. 8 eine Schnittansicht zeigt. Aus dieser ergibt sich, dass die Durchlasskanäle 38 zur Aufbringung einer Drallwirkung in Umfangsrichtung geneigt angeordnet sein können.

Die Fig. 5 und 6 zeigen Rippen 36, welche an dem ringförmigen Dichtelement 32 ausgebildet sind, um zum einen einen Abstand zu dem Schaufelfuß 30 zu gewährleisten und somit den Ringraum 34 auszubilden, und um zum anderen die Kühlluft in axialer Richtung zu leiten und eine Bewegung in Umfangsrichtung zu unterdrücken.

Bevorzugterweise ist, insbesondere bei den Ausführungsbeispielen der Fig. 2 und 4, vorgesehen, dass zwischen dem Schaufelfuß 30 und dem Ringsteg 44 ein Dichtkontakt 45 gewährleistet ist, welcher eine Kühlluftleckage verhindert. Das Bezugszeichen 46 in den Fig. 4, 6 und 7 bezeichnet Dichtungen, beispielsweise blechartige Streifendichtungen, die das Strömungsleitelement 37 gegenüber dem Schaufelfuß bzw. dem ringförmigen Dichtelement 32 abdichten.

### Bezugszeichenliste

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Statorschaufel
- 30: Schaufelfuß
- 31: Schaufelinnenraum
- 32: ringförmiges Dichtelement
- 33: Ausströmkanal
- 34: Ringraum
- 35: Zwischenstufendichtung
- 36: Rippe
- 37: Strömungsleitelement
- 38: Durchlasskanal
- 39: Wabenschicht
- 40: Anstreiflippe
- 41: Dichtungsring
- 42: Rotorscheibe
- 43: Ringschlitz
- 44: Ringsteg
- 45: Dichtkontakt
- 46: Dichtung

## Patentansprüche

1. Gasturbine mit einem Turbinenleitrad, welches mit Statorschaufeln (29) versehen ist und einen ringsegmentförmigen Schaufelfuß (30) umfasst, wobei die Statorschaufeln (29) hohl ausgebildet sind und einen mit Kühlluft beaufschlagbaren Schaufelinnenraum (31) aufweisen, wobei radial innen, bezogen auf eine Triebwerksachse (1), an dem Schaufelfuß (30) ein ringförmiges Dichtelement (32) einer Zwischenstufendichtung (35) angeordnet ist, wobei in dem Schaufelfuß (30) zumindest ein Ausströmkanal (33) ausgebildet ist, **dadurch gekennzeichnet, dass** zwischen dem Schaufelfuß (30) und dem Dichtelement (32) ein Ringraum (34), welcher sich im Wesentlichen in axialer Richtung erstreckt, ausgebildet ist, in welchen der Ausströmkanal (33) mündet und welcher in den Bereich der Zwischenstufendichtung (35) mündet.

2. Gasturbine nach Anspruch 1, **dadurch gekennzeichnet, dass** der Ringraum (34) eine im Wesentlichen gleichbleibende Breite aufweist.

3. Gasturbine nach Anspruch 1 oder 2, **dadurch gekennzeichnet, dass** in dem Ringraum (34) in Strömungsrichtung verlaufende Rippen (36) angeordnet sind.

4. Gasturbine nach Anspruch 3, **dadurch gekennzeichnet, dass** die Rippen (36) an dem Dichtelement (32) angeordnet sind.

5. Gasturbine nach einem der Ansprüche 1 bis 4, **dadurch gekennzeichnet, dass** der Mündungsbereich des Ringraums (34) zur axialen Ausströmung der Kühlluft ausgebildet ist.

6. Gasturbine nach einem der Ansprüche 1 bis 4, **dadurch gekennzeichnet, dass** der Mündungsbereich des Ringraums (34) zur in einem Winkel zur Axialrichtung und/oder Radialrichtung gerichteten Ausströmung der Kühlluft ausgebildet ist.

7. Gasturbine nach einem der Ansprüche 1 bis 6, **dadurch gekennzeichnet, dass** am Mündungsbereich des Ringraums (34) ein ringförmiges Strömungsleitelement (37) angeordnet ist.

8. Gasturbine nach Anspruch 7, **dadurch gekennzeichnet, dass** das Strömungsleitelement (37) mit Durchlasskanälen (38) versehen ist.

9. Gasturbine nach Anspruch 8, **dadurch gekennzeichnet, dass** der Durchlasskanal (38) zur Radialrichtung und/oder zur Axialrichtung geneigt ausgebildet ist.

10. Gasturbine nach einem der Ansprüche 1 bis 9, **dadurch gekennzeichnet, dass** der Ausströmkanal (33) zur Radialrichtung und/oder zur Axialrichtung geneigt ausgebildet ist.
